# EUROPEAN PATENT APPLICATION

(11) **EP 4 668 030 A1**
(43) Date of publication of application: **24.12.2025**
(21) Application number: 24843221.3
(22) Date of filing: 29.02.2024
(51) Int. Cl.: G04G 17/08, G04G 17/06, G04B 37/11, G04G 21/00, G04G 99/00

(54) **ELECTRONIC DEVICE INCLUDING SENSOR ASSEMBLY**

(30) Priority: 20.07.2023 KR 20230094339; 11.08.2023 KR 20230105610
(71) Applicant: Samsung Electronics Co., Ltd., Suwon-si, Gyeonggi-do 16677 (KR)
(72) Inventor: LEE, Geuna, Suwon-si Gyeonggi-do 16677 (KR); CHOI, Yongjun, Suwon-si Gyeonggi-do 16677 (KR); CHANG, Hyunseok, Suwon-si Gyeonggi-do 16677 (KR); CHOI, Bongsuk, Suwon-si Gyeonggi-do 16677 (KR); PARK, Jungsu, Suwon-si Gyeonggi-do 16677 (KR); SONG, Donghun, Suwon-si Gyeonggi-do 16677 (KR); YOO, Minwoo, Suwon-si Gyeonggi-do 16677 (KR)
(74) Representative: Appleyard Lees IP LLP
(86) International application number: PCT/KR2024/002645
(87) International publication number: WO 2025/018494

(57) **Abstract**

According to an embodiment disclosed herein, an electronic device may comprise: a housing that includes a first surface and a second surface facing the opposite direction as the first surface; a printed circuit board disposed in a space between the first surface and the second surface; a sensor assembly including at least one sensor, which is disposed between the first surface and the printed circuit board, and first contact members, which include conductive materials disposed on surfaces facing the printed circuit board; an elastic member including an elastic material and disposed between the printed circuit board and the sensor assembly; and a conductive plate disposed between the printed circuit board and the elastic member. In an embodiment, at least one of the first contact members can be electrically connected to the printed circuit board.

## Description

### [Technical Field]

The disclosure relates to an electronic device, for example, an electronic device including a sensor assembly.

### [Background Art]

With the development of electronic, information, or communication technology, various functions are being included in a single electronic device. For example, a smartphone may include functions of a sound playback device, an imaging device, or a digital diary, in addition to a communication function, and more various functions may be implemented in a smartphone through installation of additional applications. An electronic device may be provided with various pieces of information in real time by accessing a server or another electronic device in a wired or wireless manner as well as by executing an installed application or a stored file.

As electronic devices becomes more advanced in performance and smaller in size, carrying and using electronic devices is becoming routine, and portable electronic devices are being provided in various forms. For example, a single user may carry and use a plurality of portable electronic devices such as a smartphone, a tablet PC, a smartwatch, wireless earphones, and/or smart glasses. As the use of electronic devices becomes routine, electronic devices may selectively use more frequency bands to reduce power consumption while maintaining a constant online state and to provide users with an optimized usage environment depending on operating conditions at the time of current use.

The above-described information may be provided as related art for the purpose of assisting in understanding the disclosure. No assertion or determination is made as to whether any of the foregoing is applicable as prior art with regard to the disclosure.

### [Detailed Description of the Invention]

### [Technical Solution]

According to an example embodiment of the disclosure, an electronic device may include: a housing including a first surface and a second surface facing opposite to the first surface, a printed circuit board disposed in a space between the first surface and the second surface, a sensor assembly including at least one sensor disposed between the first surface and the printed circuit board and including first contact members comprising a conductive material disposed on a surface facing the printed circuit board, an elastic member comprising an elastic material disposed between the printed circuit board and the sensor assembly, and an electrically conductive plate disposed between the printed circuit board and the elastic member. In an embodiment, at least one of the first contact members may be electrically connected to the printed circuit board.

According to an example embodiment of the disclosure, a wearable electronic device may include: a housing including a front surface plate, a rear surface plate facing opposite to the front surface plate, and a side surface bezel disposed to at least partially surround the space between the front surface plate and the rear surface plate, at least one wearing member comprising a strap detachably provided on the housing, a printed circuit board disposed in the space between the front surface plate and the rear surface plate, a sensor assembly comprising at least one sensor disposed between the front surface plate and the printed circuit board and including first contact members comprising a conductive material disposed on a surface facing the printed circuit board, at least one processor, comprising processing circuitry, individually and/or collectively configured to determine information about an operating environment within the housing using the sensor assembly, an elastic member comprising an elastic material disposed between the printed circuit board and the sensor assembly, and an electrically conductive plate disposed between the printed circuit board and the elastic member. In an embodiment, at least one of the first contact members may be electrically connected to the printed circuit board.

### [Brief Description of Drawings]

The above and other aspects, features, and/or advantages of certain embodiments of the present disclosure may become more apparent from the following detailed description, taken in conjunction with the accompanying drawings, in which:
FIG. 1 is a block diagram illustrating an example electronic device within a network environment according to various embodiments;
FIG. 2 is a front perspective view illustrating an electronic device according to various embodiments;
FIG. 3 is a rear perspective view of the electronic device of FIG. 2 according to various embodiments;
FIG. 4 is an exploded perspective view illustrating an electronic device according to various embodiments;
FIG. 5 is an exploded perspective view illustrating a sensor assembly of an electronic device according to various embodiments;
FIG. 6 is a diagram illustrating a bottom view of the sensor assembly of FIG. 5 according to various embodiments;
FIG. 7 is a diagram illustrating a top view of the sensor assembly of FIG. 5 according to various embodiments;
FIG. 8 is an exploded perspective view illustrating an electrically conductive plate of an electronic device according to various embodiments;
FIG. 9 is a perspective view illustrating an example arrangement of an electrically conductive plate of an electronic device according to various embodiments;
FIG. 10 is a perspective view illustrating an arrangement of an electrically conductive plate of an electronic device according to various embodiments;
FIG. 11 is a diagram illustrating an example arrangement of a sensor assembly of an electronic device according to various embodiments;
FIG. 12 is a diagram illustrating a plan view of a rear surface plate of an electronic device according to various embodiments;
FIG. 13 is a cross-sectional view illustrating a portion of an electronic device, taken along line A-A' in FIG. 5, according to various embodiments;
FIG. 14 is a perspective view illustrating an example arrangement of an electrically conductive plate of an electronic device according to various embodiments; and
FIG. 15 is a cross-sectional view illustrating an arrangement of an electrically conductive plate of an electronic device according to various embodiments.

Throughout the appended drawings, like reference numerals may be assigned to like parts, components, and/or structures.

### [Mode for Carrying out the Invention]

As electronic devices become more advanced in performance and become smaller or lighter enough for users to wear them on their bodies, the manufacturing or operating environment for electronic devices may become poor. For example, when mounting antennas corresponding to various frequency bands, it may be difficult to implement a stable communication environment while suppressing electromagnetic interference with other antennas or other electronic components within a miniaturized electronic device. In detecting operating conditions at the time of current use (e.g., temperature, humidity, atmospheric pressure, the user's movement or posture, and/or brightness of the current space), an electronic device may include various types of sensors. However, it may be difficult to place multiple sensors inside a miniaturized electronic device. In a structure in which sensors are assembled or placed separately from a main circuit board, it may be more difficult to place connectors or wires for connection to the main circuit board.

An example embodiment of the disclosure may provide an electronic device, which addresses at least the problems and/or disadvantages described above, provides at least the advantages described in greater detail below, and includes a sensor assembly capable of increasing the degree of design freedom in arranging various components in the inner space.

An example embodiment of the disclosure may provide an electronic device including a sensor assembly that is easily placed in a narrow space.

An example embodiment of the disclosure may provide an electronic device including a sensor assembly that is capable of being easily connected to a main circuit board even without using connectors or wires.

The technical subjects pursued in the disclosure may not be limited to the above-mentioned technical subjects, and other technical subjects which are not mentioned may be clearly understood, through the following descriptions, by those skilled in the art to which the disclosure pertains.

The following description given with reference to the accompanying drawings may provide understanding of various implementations of the disclosure including the claims and equivalents thereof. Various example embodiments set forth in the following description includes various specific details to aid in understanding, but is not limiting. Therefore, those skilled in the art will appreciate that various changes and modifications may be made to the various implementations set forth herein without departing from the scope and technical idea of the disclosure. In addition, descriptions of well-known functions and configurations may be omitted for the sake of clarity and brevity.

The terms and words as used in the following description and the claims are not limited to bibliographical meanings, but may be used to clearly and consistently explain an embodiment of the disclosure. Therefore, it will be apparent to those skilled in the art that the following description of various implementations of the disclosure is provided not for the purpose of limiting the disclosure as defined by the scope of protection and equivalents thereof, but for the purpose of explanation.

It is to be understood that the singular forms "a," "an," and "the" include plural referents unless the context clearly dictates otherwise. Therefore, for example, reference to "a component surface" includes reference to one or more of the surfaces of a component.

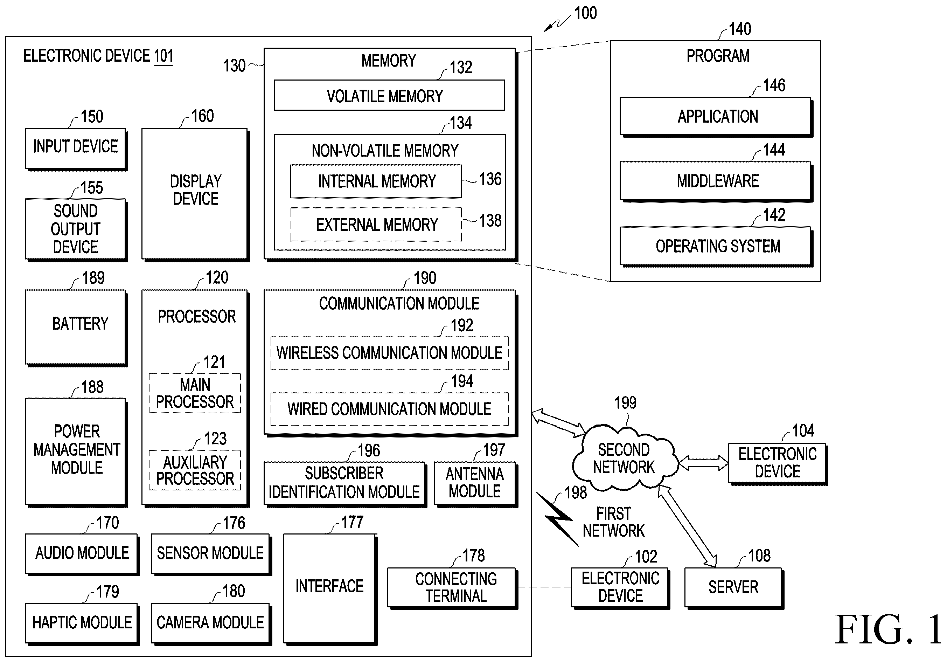

FIG. 1 is a block diagram illustrating an example electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions. The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with an embodiment of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the following detailed description, a length direction, a width direction, and/or a thickness direction of an electronic device may be referred to, wherein the length direction may be defined as the "Y-axis direction", the width direction may be defined as the "X-axis direction", and/or the thickness direction may be defined as the "Z-axis direction". In an embodiment, "negative/positive (-/+)" may be referred to together with the Cartesian coordinate system illustrated in the drawings regarding the directions in which components are oriented. For example, the front surface of an electronic device and/or a housing may be defined as a "surface oriented in the +Z direction", and the rear surface may be defined as a "surface oriented in the -Z direction". In an embodiment, a side surface of an electronic device and/or a housing may include an area oriented in the +X direction, an area oriented in the +Y direction, an area oriented in the -X direction, and/or an area oriented in the -Y direction. In an embodiment, the "X-axis direction" may include both the "-X direction" and the "+X direction". It is noted that these are based on the Cartesian coordinate system illustrated in the drawings for the sake of brevity of description, and the descriptions of these directions or components do not limit various embodiments of the disclosure. For example, depending on the design specifications of an electronic device or a user's usage habits, the Cartesian coordinate system may be defined differently from the disclosure.

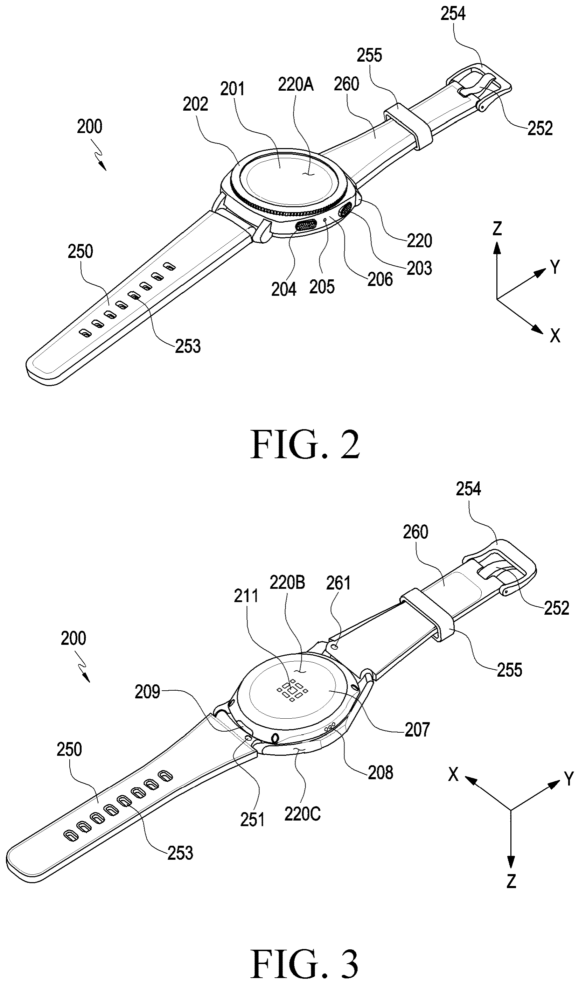

FIG. 2 is a front perspective view of an electronic device 200 (e.g., the electronic device 101 in FIG. 1) according to various embodiments. FIG. 3 is a rear perspective view of the electronic device 200 of FIG. 2 according to various embodiments.

Referring to FIGS. 2 and 3, the electronic device 200 according to an embodiment may include a housing 220 including a first surface (or a front surface) 220A, a second surface (or a rear surface) 220B, and a side surface 220C surrounding the space between the first surface 220A and the second surface 220B, and one or more wearing members (e.g., straps or bands) 250 or 260 connected to at least a portion of the housing 220 and configured to wear the electronic device 200 on a portion of a user's body (e.g., a wrist or an ankle). For example, the electronic device 200 may be used as a wearable electronic device by including the wearing members 250 and 260. In an embodiment (not illustrated), the term "housing" may refer to a structure defining some of the first surface 220A, the second surface 220B, and the side surface 220C in FIG. 2. According to an embodiment, at least a portion of the first surface 220A may be defined by a substantially transparent front surface plate 201 (e.g., a glass plate or a polymer plate including various coating layers). The second surface 220B may be defined by a substantially opaque rear surface plate 207. In an embodiment, when the electronic device includes a sensor module 211 disposed on the second surface 220B, the rear surface plate 207 may include an at least partially transparent area. The rear surface plate 207 may be made of, for example, coated or colored glass, ceramic, polymer, metal (e.g., aluminum, stainless steel (STS), or magnesium), or a combination of two or more of these materials. The side surface 220C may be defined by a side surface bezel structure (or a "side surface member") 206 coupled to the front surface plate 201 and/or the rear surface plate 207 and including metal and/or polymer. In an embodiment, the rear surface plate 207 and the side surface bezel structure 206 may be integrally configured and may include the same material (e.g., a metal material such as aluminum). The wearing members 250 and 260 may be formed of various materials and in various shapes. A plurality of integrated-type unit links may be disposed to be movable with respect to each other using a woven material, leather, rubber, urethane, metal, ceramic, or a combination of two or more of these materials.

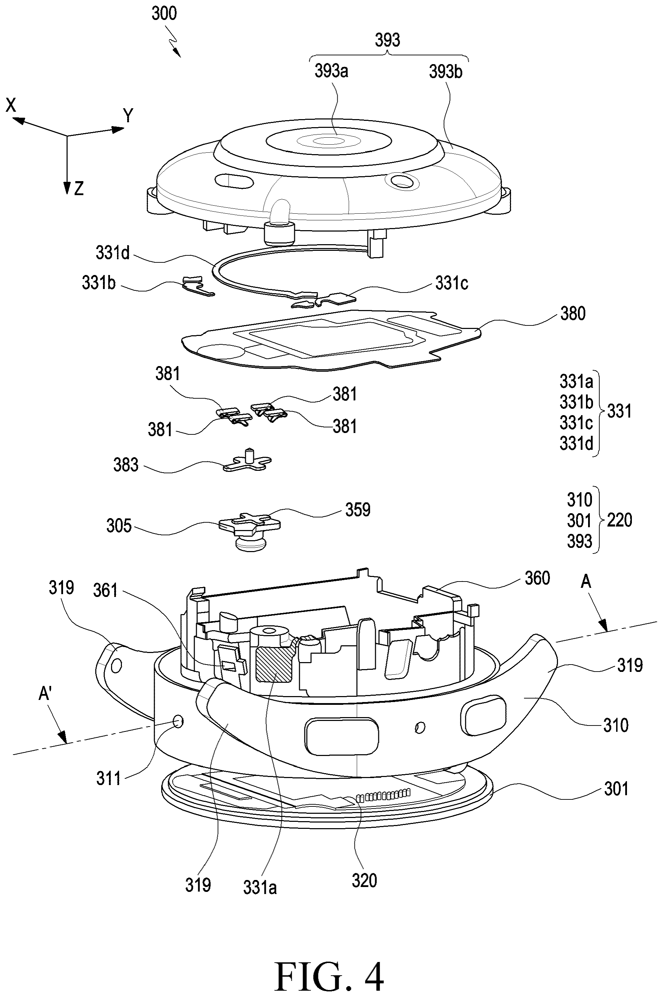

According to an embodiment, the electronic device 200 may include at least one of a display 320 (see FIG. 4), audio modules 205 and 208, a sensor module 211, key input devices 202, 203, and 204, and a connector hole 209. In an embodiment, in the electronic device 200, at least one of the components (e.g., the key input devices 202, 203, and 204, the connector hole 209, or the sensor module 211) may be omitted, or other components may be additionally included.

The display (e.g., the display 320 in FIG. 4) may be visible, for example, through a substantial portion of the front surface plate 201. The display 320 may have a shape corresponding to the shape of the front surface plate 201, and may have various shapes such as a circle, an ellipse, and a polygon. The display 320 may be coupled to or disposed adjacent to a touch detection circuit, a pressure sensor capable of measuring touch intensity (pressure), and/or a fingerprint sensor.

The audio modules 205 and 208 may include a microphone hole 205 and a speaker hole 208. A microphone configured to acquire external sound may be placed inside the microphone hole 205, and in an embodiment, a plurality of microphones may be placed to detect the direction of sound. The speaker hole 208 may be used for an external speaker and a call receiver. In an embodiment, a speaker may be included without a speaker hole (e.g., a piezo speaker).

The sensor module 211 may generate electrical signals or data values corresponding to, for example, the internal operating states or the external environmental states of the electronic device 200. The sensor module 211 may include, for example, a biometric sensor module (e.g., an HRM sensor) disposed on the second surface 220B of the housing 220. The electronic device 200 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may include a wheel key 202 disposed on the first surface 220A of the housing 220 and configured to be rotatable in at least one direction, and/or side key buttons 203 and 204 disposed on the side surface 220C of the housing 220. The wheel key 202 may have a shape corresponding to the shape of the front surface plate 201. In an embodiment, the electronic device 200 may not include some or all of the above-mentioned key input devices 202, 203, and 204, and the key input devices 202, 203, and 204, which are not included, may be implemented in other forms such as soft keys on the display 320. The connector hole 209 may accommodate a connector (e.g., a USB connector) configured to transmit/receive power and/or data to/from an external electronic device, and may include another connector hole (not illustrated) capable of accommodating a connector configured to transmit/receive an audio signal to/from an external electronic device. The electronic device 200 may further include, for example, a connector cover (not illustrated), which covers at least a portion of the connector hole 209 and blocks inflow of external foreign matter into the connector hole.

Each of the wearing members 250 and 260 may be detachably fastened to at least a portion of the housing 220 using a locking member 251 or 261. The locking members 251 and 261 may include binding components such as pogo pins, and according to an embodiment, the locking members may be replaced with protrusions or grooves formed on the wearing members 250 and 260. For example, the wearing members 250 and 260 may be coupled to the housing 220 by being engaged with the grooves or protrusions formed on the housing 220. Each of the wearing members 250 and 260 may include at least one of a fixing member 252, fixing member fastening holes 253, a band guide member 254, and a band fixing ring 255.

The fixing member 252 may be configured to fix the housing 220 and the wearing members 250 and 260 to a portion of the user's body (e.g., a wrist, an ankle, or the like). The fixing member fastening holes 253 allow the housing 220 and the wearing members 250 and 260 to be fixed to a portion of the user's body in cooperation with the fixing member 252. The band guide member 254 may be configured to limit the movement range of the fixing member 252 when the fixing member 252 is fastened to any of the fixing member fastening holes 253, thereby ensuring that the wearing members 250 and 260 are brought into close contact with and bound to a portion of the user's body. The band fixing ring 255 may limit the movement range of the wearing members 250 and 260 in the state in which the fixing member 252 and the fixing member fastening holes 253 are fastened to each other.

FIG. 4 is an exploded perspective view of an electronic device 300 (e.g., the electronic devices 101 and 200 in FIGS. 1 to 3) according to various embodiments.

Referring to FIG. 4, an electronic device 200 or 300 include a side surface bezel structure 310, a wheel key 330, a front surface plate 301 (e.g., the front surface plate 201 in FIG. 2), a display 320, a support member 360 (e.g. a bracket), a battery (not illustrated), a printed circuit board 380 (e.g., a main circuit board), a rear surface plate 393, and a wearing member (e.g., the wearing members 250 and 260 in FIG. 2 or 3). It is noted that the wearing members 250 and 260 may be fastened between fastening arms 319 provided on the side surface bezel structure 310, and that the wearing members 250 and 260 are omitted in FIG. 4. At least one of the components of the electronic device 200 or 300 may be the same as or similar to at least one of the components of the electronic device 200 of FIG. 2 or 3, and a redundant description thereof will be omitted below.

The support member 360 may be disposed inside the electronic device 200 or 300 and connected to the side surface bezel structure 310, or may be integrally configured with the side surface bezel structure 310. The support member 360 may be made of, for example, a metal material and/or a non-metal (e.g., polymer) material. The support member 360 may include one surface to which the display 320 is coupled and the other surface to which the printed circuit board 380 is coupled. A processor (e.g., the processor 120 in FIG. 1), a communication module (e.g., the communication module 190 in FIG. 1), memory (e.g., the memory 130 in FIG. 1), and/or an interface (e.g., the interface 177 in FIG. 1) may be mounted on the printed circuit board 380. The processor may include, for example, one or more of a central processing unit, an application processor, a graphics processing unit (GPU), an application processor sensor processor, or a communication processor.

The memory may include, for example, volatile memory or non-volatile memory. The interface may include, for example, a high-definition multimedia interface (HDMI), a universal serial bus (USB) interface, an SD card interface, and/or an audio interface. The interface may electrically or physically connect, for example, the electronic device 200 or 300 to an external electronic device and may include a USB connector, an SD card/MMC connector, or an audio connector.

The battery (not illustrated) is a device configured to supply power to at least one component of the electronic device 200, and may include, for example, a non-rechargeable primary battery, a rechargeable secondary battery, or a fuel cell. For example, at least a portion of the battery may be accommodated in a space provided by the support member 360 or may be disposed on substantially the same plane as the printed circuit board 380. The battery 370 may be integrally disposed inside the electronic device 200 or 300, or may be disposed to be detachable from the electronic device 200 or 300.

According to an embodiment, the electronic device 200 or 300 may include a plurality of antennas 331 (331a, 331b, 331c, and 331d). For example, the electronic device 200 or 300 may perform wireless communication with an external electronic device (e.g., the electronic devices 102 and 104 in FIG. 1) or a server, or may receive power wirelessly transmitted from the external electronic device or the server. In an embodiment, when the side surface bezel structure 310 or the support member 360 includes a metal material, the electronic device 200 or 300 may be configured such that at least a portion of the side surface bezel structure 310 and/or the support member 360 can function as an additional antenna or can be used as a radiation conductor in combination with one of the plurality of antennas 331. For example, a processor (e.g., the processor 120 in FIG. 1) or a communication module (e.g., the communication module 190 in FIG. 1) may be configured to execute wireless communication using at least a portion of the side surface bezel structure 310 or the support member 360.

According to an embodiment, the first antenna 331a among the antennas 331 may be implemented by an electrically conductive pattern provided on the support member 360. the electrically conductive pattern may be, for example, attached to the support member by processing a metal plate, or may be fabricated through a laser direct structuring (LDS) method. In an embodiment, when a portion of the side surface bezel structure 310 includes an electrically conductive material, the first antenna 331a may form an electromagnetic field coupling with the side surface bezel structure 310 so that the portion of the side surface bezel structure 310 may function as an antenna. The side surface bezel structure 310 containing an electrically conductive material may function as an antenna for accessing a commercial communication network (e.g., a fourth generation mobile communication network), and may form an electromagnetic field coupling with the first antenna 331a to be used as an antenna for short-range wireless communication such as Bluetooth communication or WiFi.

According to an embodiment, the second antenna 331b and/or the third antenna 331c among the antennas 331 may be implemented based on a flexible printed circuit board and may be provided on the rear surface plate 393. In an embodiment, the second antenna 331b and/or the third antenna 331c may be implemented by an LDS pattern on the inner surface of the rear surface plate 393. In an embodiment, the second antenna 331b and/or the third antenna 331c may function as an antenna for accessing a commercial communication network or an antenna for short-range wireless communication, and/or may be provided as a ground for another antenna to stabilize wireless communication performance.

According to an embodiment, the fourth antenna 331d among the antennas 331 may include a radiation conductor implemented by an electrically conductive sheet (or electrically conductive plate) processed into a curved or semicircular shape, and may be provided on the inner surface of the rear surface plate 393. In an embodiment, the fourth antenna 331d may be implemented based on a flexible printed circuit board or implemented as an LDS pattern. In an embodiment, the fourth antenna 33d may function as an ultra-wideband antenna and/or may serve as a ground for a short-range wireless communication antenna.

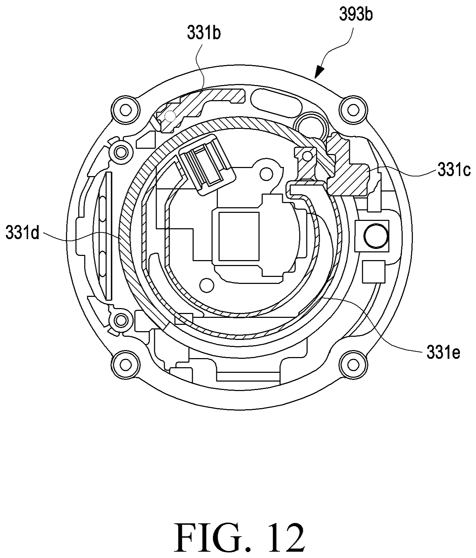

According to an embodiment, the electronic device 200 or 300 and/or the antennas 331 may further include an additional antenna not illustrated in FIG. 4 (e.g., an antenna indicated as "331e" in FIG. 12 and referred to as a "fifth antenna" below). For example, the fifth antenna 331e may be implemented based on a flexible printed circuit board or implemented as an electrically conductive sheet and/or an LDS pattern, and may be provided on the inner surface of the rear surface plate 393. In an embodiment, the fifth antenna 331e may include a near-field communication (NFC) antenna, a wireless charging antenna, and/or a magnetic secure transmission (MST) antenna. For example, the fifth antenna 331e may perform short-range communication with an external device, may wirelessly transmit/receive power required for charging, or may transmit a short-range communication signal or a magnet-based signal including payment data. In an embodiment, the fifth antenna 331e may function as an antenna for accessing a commercial communication network or an antenna for short-range wireless communication, and may stabilize wireless communication performance by providing a ground to antennas in other frequency bands.

In the above-described embodiments, the communication bands allocated to the antennas 331 have been illustratively mentioned, the embodiments of the disclosure are not limited thereto. For example, the above-mentioned description illustrates that the electronic device 200 or 300 is capable of performing wireless communication in various frequency bands, and the communication bands allocated to the antennas 331 may be appropriately changed depending on the specifications of an electronic devices 200 and 300 to be actually manufactured and the designs of the inner spaces thereof.

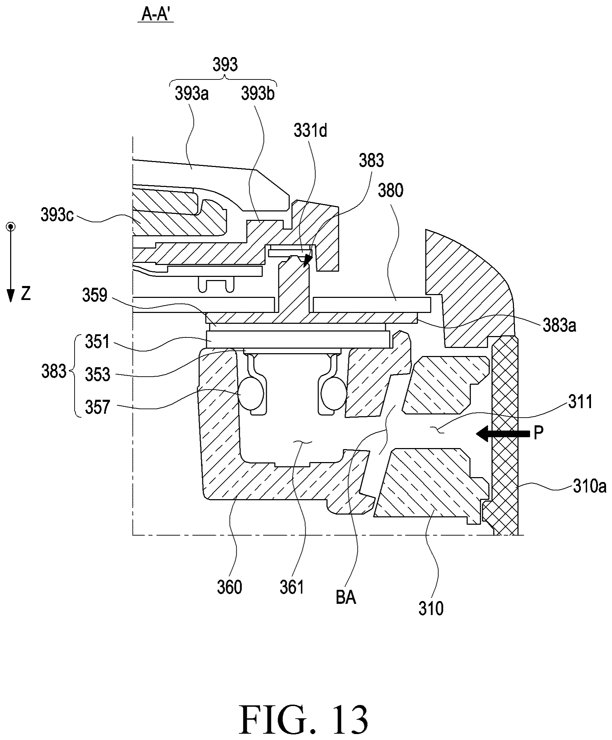

According to an embodiment, the rear surface plate 393 may include a first cover plate 393a and a second cover plate 393b disposed to surround at least a portion of the first cover plate 393a. In an embodiment, the first cover plate 393a may be coupled to the outer surface of the second cover plate 393b (e.g., the surface oriented in the -Z direction), and a sensor module (e.g., the sensor module 176 or 393c in FIG. 1 or FIG. 13) may be disposed between the first cover plate 393a and the second cover plate 393b. The sensor module disposed on the rear surface plate 393 may be, for example, a combination of a light-emitting element and a light-receiving element, and may detect user biometric information. In an embodiment, when the sensor module disposed on the rear surface plate 393 includes a light-emitting element and a light-receiving element, at least a portion of the first cover plate 393a may include a material capable of transmitting light. In the illustrated embodiment, the second cover plate 393b has a substantially circular shape when viewed in the Z-axis direction, but the disclosure is not limited thereto, and the second cover plate 393b may have a polygonal shape. In an embodiment, by coupling the first cover plate 393a to the second cover plate 393b by an adhesive or sealing member such as double-sided tape, a sealing structure or a waterproof structure may be formed between the first cover plate 393a and the second cover plate 393b.

Although not illustrated, the electronic device 200 or 300 may include a waterproof member located between the side surface bezel structure 310 and the rear surface plate 393. The waterproof member may be configured, for example, to block moisture and foreign matter flowing into the space surrounded by the side bezel structure 310 and the rear plate 393 from the outside. In an embodiment, the sealing member may include a double-sided tape disposed between the side surface bezel structure 310 and the front surface plate 301, and/or a rubber O-ring provided between the side surface bezel structure 310 and the rear surface plate 393.

According to an embodiment, the electronic device 200 or 300 may include a sensor assembly 305 as one of sensor modules (e.g., the sensor module 176 in FIG. 1) for detecting the operating environment, and may include an elastic member 359 and an electrically conductive plate 383 in placing the sensor assembly 305. The sensor assembly 305 may be disposed between a first surface (e.g., the first surface 220A in FIG. 2) (e.g., the front surface plate 301) of the electronic device 200 or 300 and the printed circuit board 380. In an embodiment, the elastic member 359 may be disposed between the sensor assembly 305 and the printed circuit board 380, and the electrically conductive plate 383 may be disposed between the elastic member 359 and the printed circuit board 380. In an embodiment, the support member 360 may be disposed between printed circuit board 380 and first side 220A to fix sensor assembly 305 on the printed circuit board 380. In an embodiment, by disposing the support member 360, the elastic member 359 may be deformed into a more compressed shape than its original manufactured state. This elastic member 359 may include, for example, at least one of rubber, silicone, or urethane, and may have a predetermined elastic modulus so that the elastic member can be easily cut into a shape with a fairly small thickness (e.g., less than about 1 mm) and width (e.g., less than about 2 mm). In an embodiment, when the elastic member 359 is made of silicone, the elastic member may be easily cut to a size having a thickness of about 0.2 mm and a width of about 0.8 mm. In an embodiment, in the case where the elastic member 359 is made of an elastic material such as rubber, silicone, or urethane, when exposed to an external force (e.g., water pressure or atmospheric pressure), the elastic member may stably support the sensor assembly 305 (e.g., the substrate 351) while being compressed to a predetermined size and may be durable against repeated compression or restoration. When exposed to an external force, the elastic member 359 may be compressed as the sensor assembly 305 moves, and depending on the change in external force, the elastic member 359 may be further compressed or restored to its pre-compression shape. By having a predetermined elastic modulus, the elastic member 359 may be durable while allowing movement of the sensor assembly 305 and inhibiting contact with other structures. In an embodiment, by having a predetermined elastic modulus, the elastic member 359 may allow the movement of the sensor assembly 305, but may suppress excessive friction of the sealing member 357 or detachment (or separation) of the sealing member 357, which will be described later, due to the movement of the sensor assembly 305.

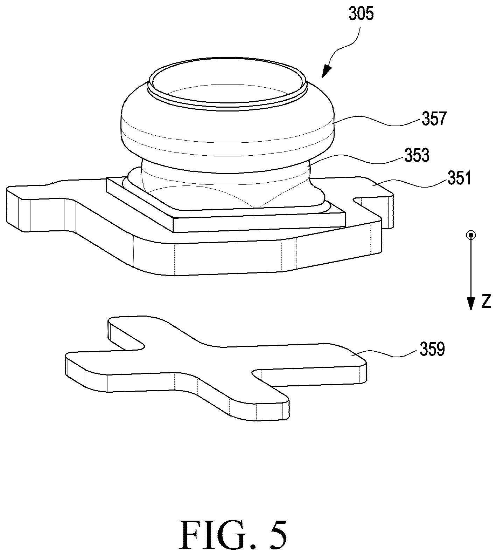

According to an embodiment, the sensor assembly 305 may be configured to measure, for example, atmospheric pressure, water pressure, temperature, user movement (e.g., displacement, direction, and/or speed) within the housing 220 or the side surface bezel structure 310, and/or to detect the brightness of the current space. An embodiment of the sensor assembly 305 will be discussed in greater detail below with reference to FIGS. 5 to 7.

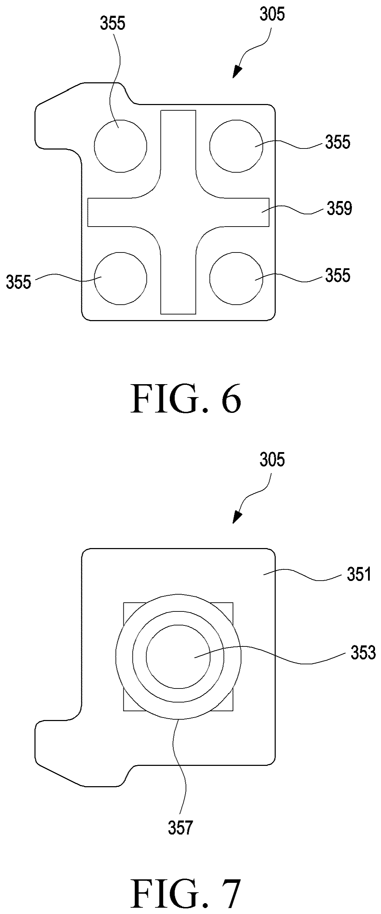

FIG. 5 is an exploded perspective view illustrating the sensor assembly 305 (e.g., the sensor assembly 305 in FIG. 4 ) of an electronic device (e.g., the electronic device 101, 200, or 300 in FIGS. 1 to 4) according to various embodiments. FIG. 6 is a diagram illustrating a bottom view of the sensor assembly 305 of FIG. 5 according to various embodiments. FIG. 7 is a diagram illustrating a top view of the sensor assembly 305 of FIG. 5 according to various embodiments.

Referring further to FIGS. 5 to 7 in conjunction with FIG. 4, the sensor assembly 305 may include first contact members 355 disposed on a surface facing the printed circuit board 380, and the first contact members 355 may be electrically connected to the printed circuit board 380. In an embodiment, the printed circuit board 380 may include second contact members 381 corresponding to the first contact members 355. For example, the sensor assembly 305 may be electrically connected to the printed circuit board 380 via the first contact members 355 and/or the second contact members 381. For example, the sensor assembly 305 may be electrically connected to the printed circuit board 380 by being substantially disposed to at least partially face the printed circuit board 380 without separate connectors or wires. Since connectors or wires for connecting the sensor assembly 305 are omitted, more space is secured for placement of other electronic components inside the electronic device 200 or 300 (e.g., the housing 220 or the side surface bezel structure 310). For example, compared to a structure in which a sensor assembly including connectors or wires is arranged, the electronic device 200 or 300 may have an expanded battery capacity. The space secured by omitting connectors or wires may be used, for example, to place additional antennas or expand a ground for antennas.

According to an embodiment, the first contact members 355 may be implemented as leaf spring structures such as C-clips, and in this case, the second contact members 381 may be implemented as electrically conductive pads. In an embodiment, the first contact members 355 may be implemented as conductive pads, and in this case, the second contact members 381 may be implemented as leaf spring structures. In an embodiment, the first contact members 355 and the second contact members 381 may be implemented as leaf spring structures. Here, the "leaf spring structures" may refer to structures that accumulate elastic force while being deformed and/or moved to a predetermined degree when an external force is applied thereto by being in contact with counterpart objects, and maintain the state in contact with the counterpart objects using the accumulated elastic force.

According to an embodiment, it may be understood that the sensor assembly 305 may include a substrate 351 and/or a sensor element 353, and the first contact members 355 are located on one surface of the substrate 351. For example, depending on the information to be detected, the sensor element 353 may include at least one of a gesture sensor, a gyro sensor, an atmospheric pressure sensor, a magnetic sensor, an acceleration sensor, a grip sensor, a proximity sensor, a color sensor, an IR sensor, a biometric sensor, a temperature sensor, a humidity sensor, or a luminance sensor, and may be disposed on the other surface of the substrate 351.

According to an embodiment, the elastic member 359 and/or the electrically conductive plate 383 may be disposed between the printed circuit board 380 and the sensor assembly 305 (e.g., the substrate 351). FIG. 6 illustrates an elastic member 359 disposed on the substrate 351. For example, by disposing the elastic member 359 in the area between the first contact members 355, an environment may be provided where the first contact members 355 are disposed to directly face the printed circuit board 380 (e.g., the second contact members 381). In an embodiment, when the elastic member 359 is disposed, the first contact members 355 may be understood as being symmetrically disposed with respect to each other about the elastic member 359. As will be described later, the electrically conductive plate 383 may differ from the elastic member in size and may be arranged on the sensor assembly 305 similarly to the elastic member 359.

According to an embodiment, when the sensor assembly 305 is configured to detect atmospheric pressure or water pressure, the sensor assembly 305 may be connected to the outer space of the electronic device 200 or 300 through the accommodation hole 361 provided in the support member 360 and/or the ventilation hole 311 provided in the side surface bezel structure 310. In an embodiment, a portion of the sensor assembly 305 (e.g., the sensor element 353) may be accommodated in the accommodation hole 361, and the ventilation hole 311 may penetrate the side surface bezel structure 310 from the outer space of the electronic device 200 to be connected to the accommodation hole 361. In an embodiment, the sensor assembly 305 may further include a sealing member (e.g., seal) 357 provided around the sensor element 353. When the sensor element 353 is at least partially accommodated in the accommodation hole 361, the sealing member 357 may be in close contact with the inner wall of the accommodation hole 361. For example, the sealing member 357 can seal or close the gap between the outer peripheral surface of the sensor element 353 and the inner wall of the accommodation hole 361 by being in contact with the inner wall of the accommodation hole 361 along a closed loop trajectory. In an embodiment, when the sensor assembly 305 is configured to detect atmospheric pressure or water pressure, the sealing member 357 may provide an environment where the sensor element is connected to the outer space through the accommodation hole and ventilation hole while suppressing or blocking inflow of moisture or foreign matter into the inner space of the electronic device 200 or 300. An arrangement of the sensor assembly 305 and a connection structure to the outer space will be discussed again with reference to FIG. 13.

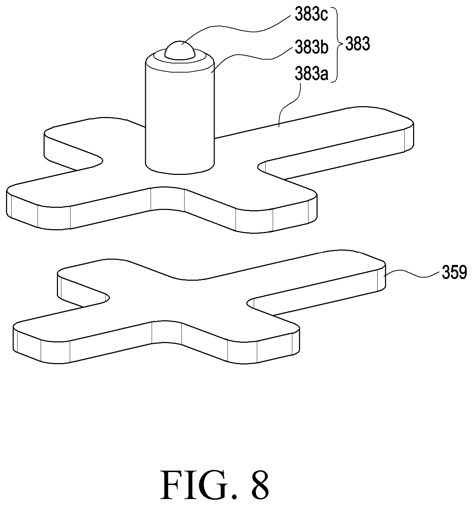

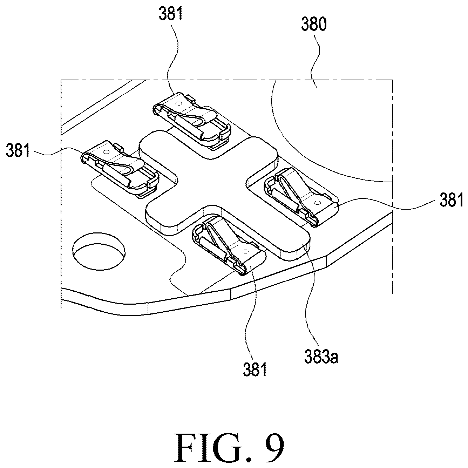

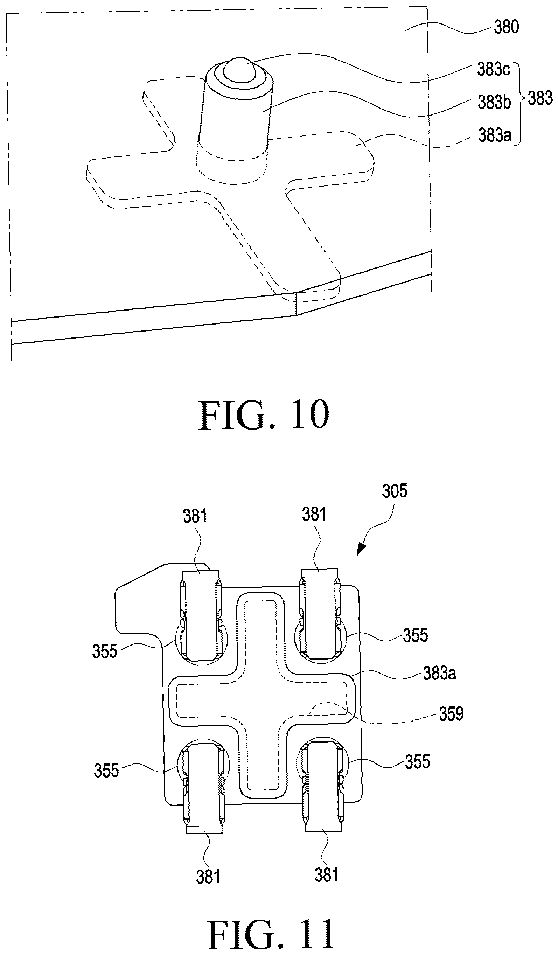

FIG. 8 is an exploded perspective view illustrating an electrically conductive plate (e.g., the electrically conductive plate 383 in FIG. 4) of an electronic device (e.g., the electronic device 101, 200, or 300 in FIGS. 1 to 4) according to various embodiments. FIG. 9 is a perspective view illustrating an example arrangement of the electrically conductive plate 383 of an electronic device 200 or 300 according to various embodiments. FIG. 10 is a perspective view illustrating an example arrangement of the electrically conductive plate 383 of an electronic device 200 or 300 according to various embodiments.

Referring further to FIGS. 8 to 10 in conjunction with FIG. 4 , the electrically conductive plate 383 may include a plate member 383a disposed on one surface of the printed circuit board 380. For example, the plate member 383a may be understood as a structure disposed between the elastic member 359 and the printed circuit board 380. In an embodiment, the electrically conductive plate 383 (e.g., the plate member 383a) may be disposed substantially in the area between the first contact members 355 and/or in the area between the second contact members 381. For example, the electrically conductive plate 383 (e.g., the plate member 383a) may be understood as being at least partially disposed in substantially the same plane as the first contact members 355 and/or the second contact members 381.

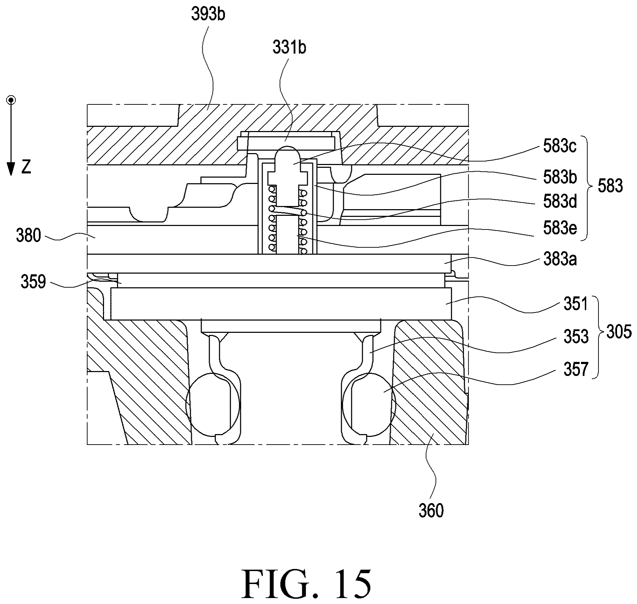

According to an embodiment, the electrically conductive plate 383 may further include a contact pole 383b extending from one surface (e.g., one surface of the plate member 383a) and/or a contact protrusion 383c provided on the contact pole 383b. As will be described later, the contact pole 383b may have a pogo-pin structure, and in this case, the contact protrusion 383c may be replaced with a contact end (e.g., the contact end 583 in FIG. 15) disposed to be retractably protruding from the end of the contact pole 383b. In an embodiment, the electrically conductive plate 383 may be disposed on the printed circuit board 380 by a surface mounting process, and the contact pole 383b may penetrate the printed circuit board 380 to protrude toward the second surface (e.g., the second surface 220B in FIG. 3). For example, when the electrically conductive plate 383 is defined as being disposed on the front surface of the printed circuit board 380, the contact pole 383b may be understood as being disposed on the rear surface of the printed circuit board 380. In an embodiment, the electrically conductive plate 383 (e.g., the contact pole 383b) may electrically connect at least one of the antennas 331 (e.g., the fourth antenna 331d) to the printed circuit board 380. For example, the electrically conductive plate 383 may stabilize wireless communication performance by connecting at least one of the antennas 331 to the ground provided on the printed circuit board 380.

According to an embodiment, when the sensor assembly 305 is configured to be exposed to external pressure (e.g., atmospheric pressure or water pressure), the elastic member 359 and/or the electrically conductive plate 383 may suppress the displacement of the sensor assembly 305. For example, even when an external force acts on the sensor assembly 305, the elastic member 359 and/or the electrically conductive plate 383 may stably support the sensor assembly 305. In an embodiment, the position of the sensor assembly 305 may be kept stable, so that the sealing structure provided by the sealing member 357 may be kept stable. In an embodiment, even when the position of the sensor assembly 305 is slightly changed due to an external force, the external force may be suppressed from being transmitted to another structure (e.g., the printed circuit board 380) by the elastic member 359.

FIG. 11 is a diagram illustrating an example arrangement of a sensor assembly (e.g., the sensor assembly 305 in FIGS. 4 to 7) of an electronic device (e.g., the electronic device 101, 200, or 300 in FIGS. 1 to 4) according to various embodiments.

Referring further to FIG. 11, when the sensor assembly 305 is disposed on the printed circuit board 380, even when there is no separate connector or wire, the first contact members 355 and the corresponding second contact members 381 may be in electrical and/or mechanical contact with each other. In the illustrated embodiment, it may be understood that the first contact members 355 are implemented as circular conductive pads, and the second contact members 381 are implemented as leaf spring structures (e.g., C-clips). In an embodiment, when the electrically conductive plate 383 (e.g., the plate member 383a) is electrically connected to the printed circuit board 380, the elastic member 359 may be disposed between the electrically conductive plate 383 and the sensor assembly 305. In an embodiment, when the electrically conductive plate 383 is not electrically connected to the printed circuit board 380, the elastic member 359 may be disposed between the electrically conductive plate 383 and the printed circuit board 380.

According to an embodiment, the elastic member 359 may be smaller than the electrically conductive plate 383 (e.g., the plate member 383a) in length or width. For example, when an external force is applied, the elastic member 359 may change in thickness, length, and/or width, and may therefore be smaller than the electrically conductive plate 383 that substantially maintains its initial shape. However, embodiments of the disclosure are not limited to this, and the elastic member 359 may be larger than the electrically conductive plate 383 depending on the specifications of the electronic device 200 or 300 or sensor assembly 305 to be actually manufactured. For example, when a sufficient gap is secured between the elastic member 359 and the first contact members 355 and/or between the electrically conductive plate 383 and the first contact members 355, the elastic member 359 may be larger than the electrically conductive plate 383. In an embodiment, the relative sizes of the elastic member 359 and the electrically conductive plate 383 may be determined in consideration of the gap between the elastic member 359 and the second contact members 381 and/or the gap between the electrically conductive plate 383 and the second contact member 381.

FIG. 12 is a diagram illustrating a plan view of a rear surface plate (e.g., the rear surface plate 393 in FIG. 4) of an electronic device (e.g., the electronic device 101, 200, or 300 in FIGS. 1 to 4) according to various embodiments. FIG. 13 is a cross-sectional view illustrating a portion of an electronic device 200 or 300, taken along line A-A' in FIG. 5 according to various embodiments.

FIG. 12 illustrates an example an arrangement of antennas 331 (331b, 331c, 331d, 331e) disposed on the inner surface of a rear surface plate 393 (e.g., the first cover plate 393b). Since, the arrangement may be similar to that in the embodiment of FIG. 4, a detailed description thereof may not be repeated here. The antennas 331 (331b, 331c, 331d, 331e) may implement wireless communication with different functions in different frequency bands (or similar frequency bands), and may provide grounds to the other antennas in an embodiment.

Referring further to FIGS. 12 and 13, the support member 360 may be substantially fixed to the side surface bezel structure 310, and may provide a structure for placing or fixing internal components (e.g., the sensor assembly 305 and/or the printed circuit board 380). The sensor assembly 305 may be disposed on one surface (e.g., the surface oriented in the +Z direction) of the printed circuit board 380, and may be supported by the elastic member 359 and the electrically conductive plate 383 (e.g., the plate member 383a). In an embodiment, by disposing the elastic member 359 and the electrically conductive plate 383 in the area between the first contact members (e.g., the first contact members 355 in FIG. 6 or FIG. 11) of the sensor assembly 305 and/ or in the area between the second contact members (e.g., the second contact members 381 in FIG. 4 or FIG. 11) of the printed circuit board 380, the sensor assembly 305 may be allowed to be electrically connected to the printed circuit board 380. For example, the sensor assembly 305 may be connected to the printed circuit board 380 without separate connectors or wires, whereby design freedom within the electronic device 200 or 300 may be improved, and/or the capacity of a battery may be easily expanded.

According to an embodiment, at least a portion of the sensor assembly 305, for example, the sensor element 353, may be accommodated in the support member 360 (e.g., the accommodation hole 361) along the +Z direction, and the accommodation hole 361 may be connected to the ventilation hole 311 in a direction crossing the Z axis. It has been previously mentioned that the ventilation hole 311 is connected to the accommodation hole 361 by, for example, penetrating the side surface bezel structure 310 from the outer space. When the sensor assembly 305 is exposed to external pressure P (e.g., atmospheric pressure or water pressure), the elastic member 359 and the electrically conductive plate 383 may prevent, suppress and/or inhibit the sensor assembly 305 from being displaced. For example, the sealing member 357 may suppress foreign matter from entering the electronic device 200 or 300 from the outside by stably maintaining close contact with the inner wall of the accommodation hole 361.

According to an embodiment, in order to suppress the inflow of external foreign matter, the electronic device 200 or 300 and/or the side surface bezel structure 310 may further include a screen member 310a. For example, the screen member 310a may be disposed over the ventilation hole 311 on the outer peripheral surface of the side surface bezel structure 310. When the sensor assembly 305 is configured to detect atmospheric pressure or water pressure, the screen member 310a may transmit external pressure to the inside of the ventilation hole 311 and/or the accommodation hole 361, but may suppress or block inflow of foreign matter into the hole 311 and/or the accommodation hole 361. In an embodiment, a screen member (not illustrated) may be additionally disposed in a boundary area BA between the ventilation hole 311 and the accommodation hole 361, and when the screen member (not illustrated) is disposed in the boundary area BA, the screen member 310a illustrated in FIG. 13 may be omitted. In an embodiment, it may be understood the screen member 310a as being substantially a portion of the side surface bezel structure 310 and/or a portion of the support member 360.

According to an embodiment, a portion of the electrically conductive plate 383 (e.g., the contact pole 383b and/or the contact protrusion 383c in FIG. 8) may be disposed on one surface of the printed circuit board 380 (e.g., the surface oriented in the -Z direction) toward the rear surface plate 393. In an embodiment, when the electrically conductive plate 383 further includes the contact pole 383b and/or the contact protrusion 383c, the electrically conductive plate 383 may electrically connect at least one of the antennas 331 (e.g., the fourth antenna 331d) to the printed circuit board 380. For example, the electrically conductive plate 383 may feed power to at least one of the antennas 331 or may connect the at least one of the antennas to a ground of the printed circuit board 380. As described above, when the electronic device 200 or 300 is a wearable electronic device miniaturized or lightweighted enough to be used while worn on a user's body, the electrically conductive plate 383 may be useful in stabilizing the operating environment of the antenna(s) placed in a confined space. In an embodiment, when the electrically conductive plate 383 electrically connects at least one of the antennas 331 to the printed circuit board 380, the contact protrusion 383c may have a semi-sphere shape. For example, the contact protrusion 383c may be provided in a hemispherical shape so that the electrically conductive plate 383 can be in stable contact with at least one of the antennas 331.

According to an embodiment, the rear surface plate 393 may have a built-in sensor module 393c configured to detect user biometric information. For example, the sensor module 393c may be accommodated in the space between the first cover plate 393a and the second cover plate 393b and may detect user biometric information. For example, when the electronic device 200 or 300 is worn on a user's body, the rear surface plate 393 (e.g., the first cover plate 393a) may be substantially in contact with the user's skin, which may allow the sensor module 393c to easily detect user biometric information.

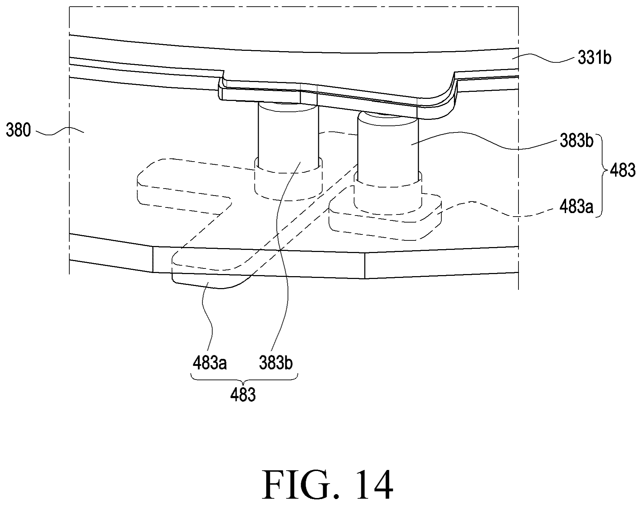

FIG. 14 is a perspective view illustrating an example arrangement of an electrically conductive plate 483 (e.g., the electrically conductive plate 383 in FIG. 4 or FIG. 8) of an electronic device (e.g., the electronic device 101, 200, or 300 in FIGS. 1 to 4) according to various embodiments.

When the above-described conductive plate 383 is defined as being a single, the embodiment of FIG. 14 may be understood as providing a plurality of conductive plates 483. For example, the electrically conductive plate 484 may include a plurality of plate members 483a and a plurality of contact poles 383b. The contact poles 383b may each extend from one of the plate members 483a and penetrate the printed circuit board 380 to come into contact with at least one (e.g., the fourth antenna 331d) of antennas (e.g., the antennas 331 (331b, 331c, 331d, 331e) in FIG. 4 or FIG. 12. The conductive plates 483 (e.g., the plate members 483a) may be disposed in the area between the second contact members 381 (or the first contact members 355) substantially on either surface of the printed circuit board 380. Depending on the positions where the electrically conductive plate 483 (e.g., the contact poles 383b) are in contact or the number of the positions, for example, the positions where the electrically conductive plate 483 provides electrical paths reaching the printed circuit board 380 or the number of the positions, the frequency of a signal transmitted and received through via least one of the antennas 331 (e.g., the fourth antenna 331d) may be adjusted. In an embodiment, depending on the positions where the electrically conductive plate 483 or the number of the positions, at least one of the antennas 331 (e.g., the fourth antenna 331d) may perform wireless communication in multiple frequency bands. In an embodiment, the electrically conductive plate 483 may function as a ground for an antenna for short-range wireless communication (e.g., Wi-Fi or Bluetooth), and an electrically conductive member (not illustrated) may be provided to function as a sub-antenna for ultra-wide band (UWB) wireless communication.

FIG. 15 is a cross-sectional view illustrating an example arrangement of an electrically conductive plate 583 (e.g., the electrically conductive plate 383 or 483 in FIG. 4, 8, or 14) of an electronic device (e.g., the electronic device 101, 200, or 300 in FIGS. 1 to 4) according to various embodiments.

Referring to FIG. 15, the structure of the above-mentioned contact protrusion (e.g., the contact protrusion 383c in FIG. 8) may be replaced with a contact end 583c disposed to retractably protrude at the end of the contact pole 583b. For example, the electrically conductive plate 583 may include a pogo pin structure. In an embodiment, the pogo pin structure may be understood as one of the above-described leaf spring structures. For example, the electrically conductive plate 583 may be a component configured to accumulate elastic force while being deformed or displaced to a predetermined degree when an external force is applied thereto by being in contact with a counterpart object (e.g., at least one of the antennas 331) and to use the accumulated elastic force to maintain the state of being in contact with the counterpart object.

According to an embodiment, the electrically conductive plate 583 may include a plate member 383a, a tube-shaped contact pole 583b, a spring member 583d accommodated in the contact pole 583b, and/or a contact end 583c supported on the spring member 583d while being accommodated in the contact pole 583b. The spring member 583d is, for example, a coil spring, and a support pin 583e may be provided inside the contact pole 583b to support the shape or position of the spring member 583d.

According to an embodiment, the contact end 583c may be maintained in a state of protruding from the end of the contact pole 583b by the elastic force of the spring member 583d, and may retract in a direction accommodated in the contact pole 583b by an external force. When no external force acts, the contact end 583c may protrude again to the end of the contact pole 583b by the elastic force of the spring member 583d. In an embodiment, when the contact end 583c is provided to retractably protrude to the end of the contact pole 583 while receiving an elastic force, the electrically conductive plate 583 may be more stably in contact with at least one of the antennas 331. For example, even when there is a manufacturing tolerances or external shock, the electrically conductive plate 583 may stably maintain at least one of the antennas 331 in the state of being electrically connected to the printed circuit board 380.

As described above, in an electronic device (e.g., the electronic device 101, 200, and 300 of FIGS. 1 to 4) according to various example embodiments of the disclosure, since separate connectors or wires can be omitted when connecting a sensor assembly (e.g., the sensor assembly 305 in FIGS. 4 to 7) to a printed circuit board (e.g., the printed circuit board 380 in FIG. 4), the sensor assembly can be easily placed in a narrow space and the degree of design freedom can be increased in arranging various component placement. In an embodiment, as connectors or wires are omitted, performance or functionality can be easily expanded by placing additional components, and battery capacity can be easily expanded. In an embodiment, the electrically conductive plate (e.g., the conductive plate 383 in FIG. 4 and/or FIG. 8), which supports the sensor assembly provides a path to electrically connect antenna(s) to a printed circuit board, may be useful in stabilizing wireless communication performance in a miniaturized device.

The effects that are obtained by the disclosure are not limited to those described above, and other effects not described above may be clearly understood by a person ordinarily skilled in the art to which the disclosure belongs from the descriptions of the above-described embodiments.

According to an example embodiment of the disclosure, an electronic device (e.g., the electronic device 101, 200, or 300 in FIGS. 1 to 4) may include: a housing (e.g., the housing 220 in FIG. 2) including a first surface (e.g., the first surface 220A in FIG. 2) and a second surface (e.g., the second surface 220B in FIG. 3) facing opposite to the first surface, a printed circuit board (e.g., the printed circuit board 380 in FIG. 4) disposed in the space between the first surface and the second surface, a sensor assembly including at least one sensor (e.g., the sensor assembly 305 in FIGS. 4 to 7) disposed between the first surface and the printed circuit board and including first contact members comprising a conductive material (e.g., the first contact members 355 in FIG. 6) disposed on a surface facing the printed circuit board, an elastic member comprising an elastic material (e.g., the elastic member 359 in FIG. 4 and/or FIG. 6) disposed between the printed circuit board and the sensor assembly, and an electrically conductive plate (e.g., the electrically conductive plate 383 in FIG. 4 and/or FIG. 8) disposed between the printed circuit board and the elastic member. In an embodiment, at least one of the first contact members may be electrically connected to the printed circuit board.

According to an example embodiment, the printed circuit board may include second contact members comprising a conductive material (e.g., the second contact members 381 in FIG. 4 and/or FIG. 11) configured to contact one of the first contact members. In an example embodiment, the sensor assembly may be electrically connected to the printed circuit board via the first contact members and the second contact members.

According to an example embodiment, at least one of the elastic member or the electrically conductive plate may be at least partially disposed in an area between the first contact members.

According to an example embodiment, the electronic device may further include a support (e.g., the support member 360 in FIG. 4) disposed between the first surface and the printed circuit board. In an example embodiment, the support may be configured to fix the sensor assembly on the printed circuit board.

According to an example embodiment, the sensor assembly may further include a substrate (e.g., the substrate 351 in FIGS. 5 to 7) and a sensor element (e.g., the sensor element 353 in FIGS. 5 to 7) disposed on one surface of the substrate. In an example embodiment, the first contact members may be disposed on an other surface of the substrate.

According to an example embodiment, the electrically conductive plate may further include a contact pole (e.g., the contact pole 383b in FIG. 8) extending from one surface. In an example embodiment, the contact pole may penetrate the printed circuit board and protrude toward the second surface.

According to an example embodiment, the electronic device may further include a rear surface plate (e.g., the rear surface plate 393 in FIG. 4) disposed between the second surface and the printed circuit board, and a radiation conductor (e.g., one of the antennas 331 (331b, 331c, 331d, 331e) in FIG. 12) disposed on the surface of the rear surface plate facing the printed circuit board. In an example embodiment, the contact pole or the electrically conductive plate may electrically connect the radiation conductor to the printed circuit board.

According to an example embodiment, the electrically conductive plate may further include a semi-sphere-shaped contact protrusion (e.g., the contact protrusion 383c in FIG. 8) protruding from an end of the contact pole or a contact end (e.g., the contact end 583c in FIG. 15) disposed to be retractably protrude from the end of the contact pole.

According to an example embodiment, each of the first contact members may include an electrically conductive pad.

According to an example embodiment, the elastic material of the elastic member may include at least one of rubber, silicone, or urethane.

According to an example embodiment, the electronic device may further include at least one processor, comprising processing circuitry (e.g., the processor 120 in FIG. 1), individually and/or collectively, configured to identify the atmospheric pressure or water pressure inside the housing using the sensor assembly.

According to an example embodiment, the electronic device may further include a side surface bezel (e.g., the side surface bezel structure 310 of FIG. 4) that at least partially surrounds the space between the first surface and the second surface, a support disposed between the first surface and the printed circuit board and configured to fix the sensor assembly on the printed circuit board, an accommodation hole (e.g., the accommodation hole 361 in FIG. 4 and/or FIG. 13) provided in the support member and configured to accommodate a portion of the sensor assembly, and a ventilation hole (e.g., the ventilation hole 311 in FIG. 4 and/or FIG. 13) penetrating the side surface bezel and connected to the accommodation hole.

According to an example embodiment, the sensor assembly may further include a substrate, a sensor element disposed on one surface of the substrate, and a seal (e.g., the sealing member 357 in FIG. 5) provided around the sensor element. In an example embodiment, the seal may be in contact with the inner wall of the accommodation hole.

According to an example embodiment, the seal may be in contact with the inner wall of the accommodation hole along a closed loop trajectory.

According to an example embodiment of the disclosure, a wearable electronic device (e.g., the electronic device 101, 200, or 300 in FIGS. 1 to 4) may include: a housing (e.g., the housing 220 in FIG. 2) including a front surface plate (e.g., the first surface 220A in FIG. 2 or the front surface plate 301 in FIG. 4), a rear surface plate (e.g., the second surface 220B in FIG. 3 or the rear surface plate 393 in FIG. 4) facing opposite to the front surface plate, and a side surface bezel (e.g., the side surface bezel structure 310 in FIG. 4) at least partially surrounding a space between the front surface plate and the rear surface plate, at least one wearing member comprising a strap or band (e.g., the wearing members 250 and 260 in FIG. 2 and/or FIG. 3) detachably provided on the housing, a printed circuit board (e.g., the printed circuit board 380 in FIG. 4) disposed in the space between the front surface plate and the rear surface plate, a sensor assembly including at least one sensor (e.g., the sensor assembly 305 in FIGS. 4 to 7) disposed between the front surface plate and the printed circuit board and including first contact members comprising a conductive material (e.g., the contact members 355 in FIG. 6) disposed on a surface facing the printed circuit board, at least one processor, comprising processing circuitry (e.g., the processor 120 in FIG. 1), individually and/or collectively, configured to determine information about an operating environment within the housing using the sensor assembly, an elastic member comprising an elastic material (e.g., the elastic member 359 in FIG. 4 and/or FIG. 6) disposed between the printed circuit board and the sensor assembly, and an electrically conductive plate (e.g., the electrically conductive plate 383 in FIG. 4 and/or FIG. 8) disposed between the printed circuit board and the elastic member. In an example embodiment, at least one of the first contact members may be electrically connected to the printed circuit board.

According to an example embodiment, the sensor assembly may further include a substrate (e.g., the substrate 351 in FIGS. 5 to 7) and a sensor element (e.g., the sensor element 353 in FIGS. 5 to 7) disposed on one surface of the substrate. In an example embodiment, the first contact members may be disposed on an other surface of the substrate.

According to an example embodiment, the electrically conductive plate may further include a contact pole (e.g., the contact pole 383b in FIG. 8) extending from one surface. In an example embodiment, the contact pole may penetrate the printed circuit board and protrude on the printed circuit board toward the rear surface plate.

According to an example embodiment, the wearable electronic device may further include a radiation conductor (e.g., one of the antennas 331 (331b, 331c, 331d, 331e) in FIG. 12) disposed on a surface of the rear surface plate facing the printed circuit board. In an example embodiment, the contact pole or the electrically conductive plate may electrically connect the radiation conductor to the printed circuit board.

According to an example embodiment, the electrically conductive plate may further include a semi-sphere-shaped contact protrusion (e.g., the contact protrusion 383c in FIG. 8) protruding from an end of the contact pole or a contact end (e.g., the contact end 583c in FIG. 15) configured to be retractably protrude from the end of the contact pole.

According to an example embodiment, the electronic device may further include a support (e.g., the support member 360 in FIG. 4) disposed between the front surface plate and the printed circuit board and configured to fix the sensor assembly on the printed circuit board, an accommodation hole (e.g., the accommodation hole 361 in FIG. 4 and/or FIG. 13) provided in the support to accommodate a portion of the sensor assembly, and a ventilation hole (e.g., the ventilation hole 311 in FIG. 4 and/or FIG. 13) penetrating the side surface bezel and connected to the accommodation hole.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device (101; 200; 300) comprising:
a housing (220) comprising a first surface (220A) and a second surface (220B) facing opposite to the first surface;
a printed circuit board (380) disposed in a space between the first surface and the second surface;
a sensor assembly (305)comprising at least one sensor disposed between the first surface and the printed circuit board and comprising first contact members (355)comprising a conductive material disposed on a surface facing the printed circuit board;
an elastic member (359)comprising an elastic material disposed between the printed circuit board and the sensor assembly; and
an electrically conductive plate (383; 483; 583) disposed between the printed circuit board and the elastic member,
wherein at least one of the first contact members is electrically connected to the printed circuit board.

2. The electronic device of claim 1, wherein the printed circuit board comprises second contact members (381)comprising a conductive material configured to be in contact one of the first contact members, and
wherein the sensor assembly is electrically connected to the printed circuit board via the first contact members and the second contact members.

3. The electronic device of one of claims 1 and 2, wherein at least one of the elastic member or the electrically conductive plate is at least partially disposed in an area between the first contact members.

4. The electronic device of one of claims 1 to 3, further comprising a support (360) disposed between the first surface and the printed circuit board,
wherein the support is configured to fix the sensor assembly on the printed circuit board.

5. The electronic device of one of claims 1 to 4, wherein the sensor assembly further comprises a substrate (351) and a sensor element (353) disposed on one surface of the substrate, and
wherein the first contact members are disposed on another surface of the substrate.

6. The electronic device of one of claims 1 to 5, wherein the electrically conductive plate further comprises a contact pole (383b; 583b) extending from one surface, and
wherein the contact pole penetrates the printed circuit board and protrudes toward the second surface beyond the printed circuit board.

7. The electronic device of claim 6, further comprising:
a rear surface plate (393) disposed between the second surface and the printed circuit board; and
a radiation conductor (331) disposed on a surface of the rear surface plate facing the printed circuit board,
wherein the contact pole or the electrically conductive plate electrically connects the radiation conductor to the printed circuit board.

8. The electronic device of one of claims 6 and 7, wherein the electrically conductive plate further comprises a semi-sphere-shaped contact protrusion (383c)protruding from an end of the contact pole or a contact end (583c) configured to retractably protrude from the end of the contact pole.

9. The electronic device of one of claims 1 to 8, wherein each of the first contact members comprises an electrically conductive pad.

10. The electronic device of one of claims 1 to 9, wherein the elastic material of the elastic member comprises at least one of rubber, silicone, or urethane.

11. The electronic device of one of claims 1 to 10, further comprising at least one processor, comprising processing circuitry, individually and/or collectively, (120) configured to identify atmospheric pressure or water pressure inside the housing using the sensor assembly.

12. The electronic device of claim 11, further comprising:
a side surface bezel (310) at least partially surrounding the space between the first surface and the second surface;
a support disposed between the first surface and the printed circuit board and configured to fix the sensor assembly on the printed circuit board;
an accommodation hole (361) provided in the support and configured to accommodate a portion of the sensor assembly; and
a ventilation hole (311) penetrating the side surface bezel and connected to the accommodation hole.

13. The electronic device of claim 12, wherein the sensor assembly further comprises a substrate, a sensor element disposed on one surface of the substrate, and a seal (357) provided around the sensor element, and
wherein the seal is in contact with the inner wall of the accommodation hole.

14. The electronic device of claim 13, wherein the seal is in contact with an inner wall of the accommodation hole along a closed loop trajectory.

15. The electronic device of one of claims 1 to 14, further comprising:
at least one wearing member (250, 260)comprising a strap or band detachably provided on the housing.
